# EUROPÄISCHE PATENTSCHRIFT

(11) **EP 0 688 074 B1**
(45) Veröffentlichungstag und Bekanntmachung des Hinweises auf die Patenterteilung: **15.10.1997**
(21) Anmeldenummer: 95108111.6
(22) Anmeldetag: 27.05.1995
(51) Int. Cl.: H02G 3/12

(54) **Halterung für Installationsgeräte**
Mount for installation apparatus
Dispositif de fixation d'appareils d'installation

(30) Priorität: 18.06.1994 DE 9409882 U
(43) Veröffentlichungstag der Anmeldung: 20.12.1995
(73) Patentinhaber: REHAU AG + Co, 95111 Rehau (DE)
(72) Erfinder: Schinzel, Hartmut, c/o Rehau AG + Co., D-95111 Rehau (DE); Zielke, Peter, c/o Rehau AG + Co., D-95111 Rehau (DE); Metzger, Manfred, c/o Rehau AG + Co., D-95111 Rehau (DE)

(56) Entgegenhaltungen:
- EP-A- 0 289 410
- US-A- 4 723 746

## Beschreibung

Die Erfindung betrifft eine Halterung für Installationsgeräte in Kabelkanälen mit Befestigungselementen zur Festlegung an Bodenbereichen der Kabelkanäle, in welchen längsverlaufende, U-förmige Aufrasthalter mit in entgegengesetzter Richtung nach außen abragenden Rastschenkeln angeordnet sind, welche am Installationsgerät angeformte Rastelemente halternd hintergreifen.

Aus dem DE-U 93 03 404.0 ist eine Geräteeinbaudose mit Befestigungselementen zur Festlegung an Bodenbereichen von Kabelkanälen bekannt. Am Boden des Kabelkanals sind hierbei längsverlaufend, U-förmige Aufrasthalter mit in entgegengesetzter Richtung nach außen abragenden Rastschenkeln angeordnet. Diese Rastschenkel hintergreifen halternd an der Geräteeinbaudose angeordnete Rastelemente. Hierbei sind an den Unterboden der Geräteeinbaudose einerseits zwei einstückig angeformte Rastelemente mit Rasthaken angeordnet, die parallel zur Mittelachse der Geräteeinbaudose nach außen versetzt randnah vom Unterboden abragen.

Das am gegenüberliegenden Rand der Geräteeinbaudose angeordnete Rastelement ist in Mittelbereichen zwischen den beiden Rastelementen als beweglicher Rastverschluß ausgebildet.

Mit dieser Ausführungsform kann vorteilhaft eine Geräteeinbaudose oder ein ähnliches elektrisches Gerät am Boden eines Kabelkanals leicht wieder lösbar befestigt werden. Zum Auswechseln einer solchen elektrischen Baueinheit muß diese nach Lösung des bewegbaren Rastelementes nur an den festliegenden Verbindungsstellen entrastet und entnommen werden. Erst dann kann ein anderes elektrisches Installationselement, z.B. eine Telefondose, die an ihrem Bodenbereich mit den entsprechenden festen und dem beweglichen Rastelementen ausgestattet ist, an der gleichen Stelle befestigt werden.

Aus der EU-0 240 916 B1 ist ein Installationsgerät für Leitungsführungskanäle bekannt, das aus einem Gehäuseunterteil und einem Gehäuseoberteil besteht. Das Gehäuseunterteil und das Gehäuseoberteil sind miteinander vernietet. Diese Einheit kann über Stützfüße und Führungsnasen in Längsnuten der Leitungsführungskanäle eingesetzt werden. Die bekannte Baueinheit kann durch einen Deckelverschluß im lichten Querschnitt des Leitungsführungskanals festgelegt werden. Auch hier wird es als nachteilig angesehen, daß die gesamte Baueinheit samt Unterteil bei einem Auswechselvorgang aus dem Leitungsführungskanal entnommen und durch eine neue Baueinheit ersetzt werden muß.

Aus dem DE-U 93 13 599.8 ist eine mit zum Aufrasthalter des Kanalbodens gerichteten Rastelementen ausgestattete Grundplatte vorgesehen, an deren Stirnseiten aus der Plattenebene aufragende, deckelverschließbare Anschlußräume für Leitungen einstückig angeformt sind. Von der Plattenebene zwischen den stirnseitigen Anschlußräumen ragen bei dieser Ausführungsform Rastelemente zur Aufnahme von Gegenrasten an komplett vorverdrahteten elektrischen Baueinheiten auf. Die Grundplatte dient dabei als mechanisches Trageelement und stellt die mechanische Verbindung zwischen der Befestigungsschiene im Kanal und der vorverdrahteten elektrischen Baugruppe her. Diese Grundplatte nach dem Stand der Technik ist in begrenztem Maße einsetzbar, wobei die Grenzen durch die stirnseitig aus der Plattenebene aufragenden, deckelverschließbaren Anschlußräume für Leitungen gesetzt sind. Da diese Anschlußräume einstückig an die Grundplatte angeformt sind, ist der variable Einsatz unterschiedlich großer bzw. langer Installationsgeräte nicht gewährleistet.

Hier setzt die Erfindung ein, die sich in Fortbildung des Standes der Technik die Aufgabe gestellt hat, eine variabel einsetzbare Grundplatte für Installationsgeräte beliebiger Abmessungen zu gestalten.

Erfindungsgemäß wird dazu vorgeschlagen, daß eine mit zum Aufrasthalter des Kanalbodens gerichteten Rastelementen ausgestattete Grundplatte vorgesehen ist, welche an ihrem einen Längsrand im Wechsel mit den Öffnungen für die zum Kabelkanal gerichteten Rastelemente wenigstens zwei Einrastöffnungen und an ihrem gegenüberliegenden Längsrand wenigstens eine Einrastöffnung für entsprechend an der Unterseite des Installationsgerätes ausgebildete, langgestreckte und mit aufeinander zugerichteten Rastnasen ausgestattete Rastschenkel eingebracht sind, und daß randnah am Boden des Installationsgerätes in gleicher Streckrichtung wie die Rastschenkel verlaufende Abstandhalter angeformt sind, welche das Installationsgerät im Verrasterungszustand auf den zugeordneten Bodenbereichen der Grundplatte abstützen.

Bei dieser Ausführungsform der Grundplatte sind an einem Plattenlängsrand mehrere Möglichkeiten für den beweglichen Rastverschluß eines Installationsgerätes vorgesehen. Je nach Ausführungsform einer solchen elektrischen Baugruppe kann zwischen den nötigen beweglichen Rastverschlüssen der Grundplatte gewählt werden. So kann bei einer aufzurastenden Doppelsteckdose nur der mittlere bewegliche Rastverschluß genutzt werden, während bei einer längeren Dreifachsteckdose die beiden äußeren beweglichen Rastverschlüsse der Grundplatte nutzbar sind.

Im Unterschied zum Stand der Technik, bei dem starre Aufnahmehaken an der Grundplatte die Anwendungsmöglichkeiten begrenzt hatten, entfallen derartige starre Haken bei der Erfindung, da in die Grundplatte jetzt entsprechende Durchbrüche eingebracht sind. Erfindungsgemäß sind an der jeweils elektrisch vorverdrahteten Baugruppe entsprechende Rasthaken angeformt, die in die Durchbrüche der Grundplatte eingreifen und dort verrasten. In den betreffenden Längsrand der Grundplatte sind mehrere solcher Durchbrüche eingebracht, von denen je nach Bauart der elektrisch vorverdrahteten Baugruppe unterschiedliche Durchbrüche zur Festlegung der Baugruppe verwendet werden können.

Die Rastschenkel und die Abstandhalter sind vorteilhaft in ihrer gestreckten Länge derart aufeinander abgestimmt, daß im Verrasterungszustand zwischen der äußeren Bodenfläche des Installationsgerätes und der Oberseite der Grundplatte ein definierter Abstand gebildet ist. Dadurch können weitere Leitungen zwischen der Grundplatte und dem Installationsgerät verlegt werden. Hier ist z.B. eine Direktkontaktierung von Installationsgeräten über Flachleitungen möglich, die im Freiraum zwischen der Grundplatte und dem Installationsgerät verlegt sind. Diese Direktkontaktierung ist beispielsweise als Einzelkontaktierung je Draht oder als Sammelkontaktierung mindestens zweipolig durch Quetschverbindung, Schraublösung oder Schneidklemmen möglich.

Dadurch ergibt sich der Vorteil, daß das Installationsgerät im kontaktierten Zustand aus dem Kabelkanal entnommen werden kann, da das Installationsgerät und die Grundplatte zusammen im verrasteten Zustand herausgenommen werden können. Dies ist möglich, weil die Grundplatte ohne Lösung des Installationsgerätes von ihrem festen Sitz im Kabelkanal gelöst und entnommen werden kann. Die hierzu erforderliche Befestigungstechnik ist im DE-U 93 03 404.0 beschrieben und veröffentlicht.

Darüberhinaus kann bei der Entnahme des Installationsgerätes eine Abdeckung auf die Grundplatte aufgerastet werden, so daß die "angeschnittene" Flachleitung ohne Gefahr im Kabelkanal verbleiben kann. Die erfindungsgemäße Halterung für Installationsgeräte beschränkt die aufwendige Befestigungstechnik allein auf die Grundplatte, die mit dieser Technik an den Halterungen im Kabelkanal befestigt wird. Die auf die Grundplatte selbst aufzubringenden Installationsgeräte sind nur mit Rasthaken bestückt, welche in die dafür vorgesehenen Ausnehmungen der Grundplatte eingeführt und dort festgelegt werden. Dadurch lassen sich die Installationsgeräte vorteilhaft ohne Werkzeuge auf die Grundplatte intallieren, da hier lediglich die Rastfunktion als Festlegemittel verwendet wird.

Die Grundplatte wirkt erfindungsgemäß als universelle Baugruppe zur Aufnahme verschiedenartiger Typen von Installationsgeräten in Modulbauweise. Hierbei kann ein Grundmodul n=1 als kleinstes Bauelement festgelegt werden, welches beliebig erweiterbar ist. Ggf. können mehrere solcher Grundplatten hintereinander angereiht werden, um so zur Aufnahme von großen Installationsgeräten bei gleichzeitiger Ausnutzung der Vorteile der Erfindung zu dienen.

In der Zeichnung sind Ausführungsbeispiele der erfindungsgemäßen Halterung schematisch dargestellt; es zeigt:
Fig.1 die Grundplatte in perspektivischer Ansicht
Fig.2 die Grundplatte nach Fig.1 in der Aufrasterung auf der Kanal-Profilschiene
Fig.3 ein elektrisches Installationsgerät zur Aufrasterung auf die Grundplatte

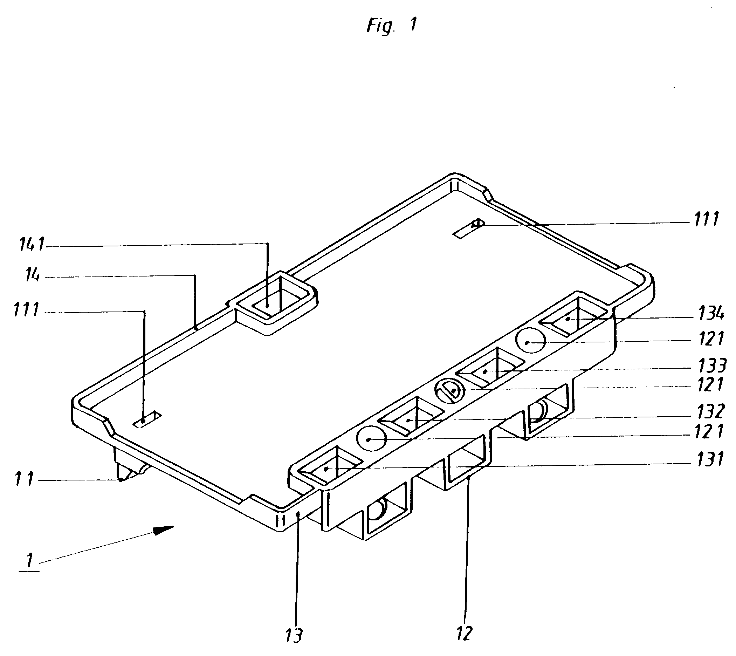

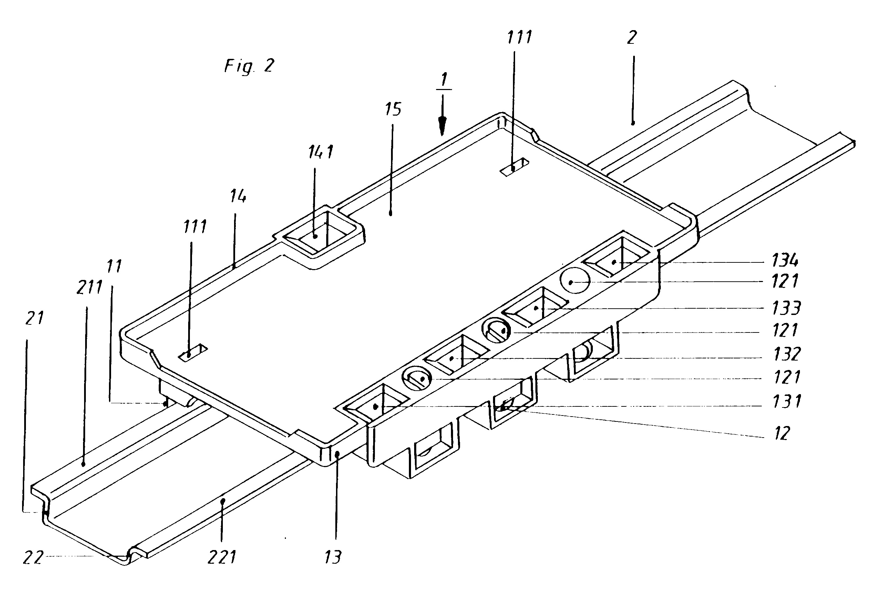

Fig.1 zeigt die Grundplatte 1 mit ihren zum Aufrasthalter 2 (Fig.2) des in der Zeichnung nicht dargestellten Kabelkanal-Bodens gerichteten Rastelementen 11, 12. Die Rastelemente 11, 12 unterscheiden sich einerseits durch das oder die starren Rastelemente 11 und andererseits durch das oder die beweglichen Rastelemente 12. Diese Befestigungstechnik der Grundplatte ist in der diesseitigen DE-U 93 03 404.0 vorbeschrieben und veröffentlicht. Sie wird in dieser Form auch bei der vorliegenden Erfindung verwendet.

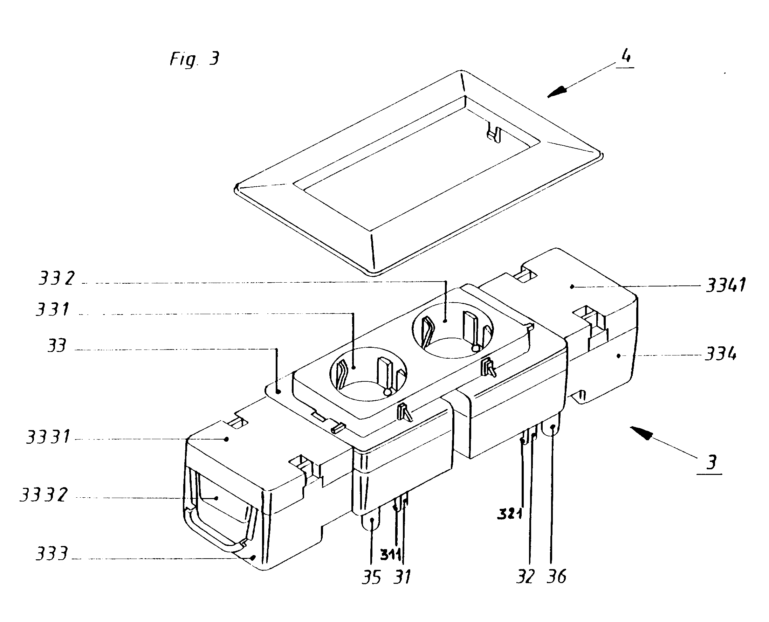

Die Grundplatte 1 besitzt neben den Öffnungen 111, 121 zur Manipulation der festen bzw. beweglichen Rastelemente 11, 12 am Rand 13 hintereinanderliegend mehrere Eingreiföffnungen 131, 132, 133, 134, welche zur Aufnahme von Rasthaken 31, 32 am Installationsgerät 3 (Fig.3) dienen.

An dem dem Rand 13 gegenüberliegenden Rand 14 der Grundplatte 1 ist eine einzige Einrastöffnung 141 ausgeformt, in welche ein in der Zeichnung nicht dargestellter Rasthaken des Installationsgerätes einrastet.

Fig.2 zeigt die Grundplatte gemäß Fig.1 in der Aufrastung auf der Kanal-Profilschiene 2. Gleiche Details haben hier gleiche Bezugszahlen erhalten wie in Fig.1. Der starre Rasthaken 11 ist in der gezeigten Darstellung hinter den ausladenden Rand 211 des U-Schenkels 21 der Profilschiene 2 eingehakt. Das bewegliche Rastelement 12 am Rand 13 der Grundplatte 1 ist so verdreht worden, daß seine Raste unter den Rand 221 des U-Schenkels 22 der Profilschiene 2 greift und dadurch die Grundplatte 1 auf der Profilschiene 2 festlegt.

Fig.3 zeigt das elektrische Installationsgerät 3 - hier eine Zweifach-Steckdose - vor der Aufrasterung auf die Grundplatte 1 gemäß Fig.2. Das elektrische Installationsgerät 3 besitzt den Dosenkörper 33 mit den beiden Steckdosen-Töpfen 331, 332. An den Steckdosenkörper 33 sind einstückig Kabelanschlußräume 333, 334 angeformt, welche mit den Deckeln 3331, 3341 verschließbar sind. Die Anschlußräume 333, 334 sind symmetrisch zur Mittelachse des Installationsgerätes 3 angeordnet, was Montagevorteile für den Fall bringt, daß in dem Kabelkanal längsverlaufende Trennwände angeordnet sind. An den Stirnwänden der Anschlußräume 333, 334 sind Öffnungen 3332 für die Leitungseinführung ausgeformt.

Das Installationsgerät 3 wird über die Rasthaken 31, 32 und den gegenüberliegenden, nicht dargestellten Rasthaken 34 beispielsweise in die Einrastöffnungen 131, 134, 141 der Grundplatte eingesetzt und dort durch Anwendung eines Drucks von oben verrastet. Dabei stützen sich die in gleicher Streckrichtung wie die Rasthaken 31, 32, 34 (letzterer nicht gezeigt) verlaufenden Abstandhalter 35, 36, 37, 38 im Verrasterungszustand auf den zugeordneten Bodenbereichen 15 der Grundplatte 1 ab. Die Abstandhalter 37, 38 sind in Fig.3 nicht gezeigt.

Diese Abstandhalter sind spiegelbildlich zu den Abstandhaltern 35, 36 am gegenüberliegenden Rand des Installationsgerätes in gleicher Abmessung angeformt. Das gleiche gilt für den nicht gezeigten Rasthaken 34.

Dadurch wird zwischen den Bodenbereichen 15 der Grundplatte 1 und dem Bodenbereich des Installationsgerätes 3 ein zusätzlicher, definierter Abstand geschaffen, in welchem Verdrahtungen oder dergleichen verlaufen können.

Das Installationsgerät 3 kann schließlich in seinem Rastsitz auf der Grundplatte 1 durch eine Blende 4 abgedeckt werden.

Das Installationsgerät 3 kann in der gezeigten Form im elektrisch angeschlossenen Zustand auf die Grundplatte 1 aufgerastet werden, so daß im Kabelkanal selbst keinerlei Verdrahtungsarbeiten mehr durchgeführt werden müssen.

## Patentansprüche

1. Halterung für Installationsgeräte (3) in Kabelkanälen mit Befestigungselementen zur Festlegung an Bodenbereichen der Kabelkanäle (2), in welchen längsverlaufende, U-förmige Aufrasthalter mit in entgegengesetzter Richtung nach außen abragenden Rastschenkeln (21,22) angeordnet sind, welche am Installationsgerät angeformte Rastelemente (11,12) halternd hintergreifen, dadurch gekennzeichnet, daß eine mit zum Aufrasthalter (2) des Kanalbodens gerichteten Rastelementen (11, 12) ausgestattete Grundplatte (1) vorgesehen ist, welche an ihrem einen Längsrand (13) im Wechsel mit den Öffnungen (121) für die zum Kabelkanal gerichteten Rastelemente (12) wenigstens zwei Einrastöffnungen (131, 132, 133, 134) und an ihrem gegenüberliegenden Längsrand (14) wenigstens eine Einrastöffnung (141) für entsprechend an der Unterseite des Installationsgerätes (3) ausgebildete langgestreckte und mit aufeinander zugerichteten Rastnasen (311, 321, 341) ausgestattete Rasthaken (31, 32, 34) eingebracht sind, und daß randnah am Boden des Installationsgerätes (3) in gleicher Streckrichtung der Rasthaken (31, 32, 34) verlaufende Abstandhalter (35, 36, 37, 38) angeformt sind, welche das Installationsgerät (3) im Verrasterungszustand auf den zugeordneten Bodenbereichen (15) der Grundplatte (1) abstützen.

2. Halterung nach Anspruch 1, dadurch gekennzeichnet, daß die Rasthaken (31, 32, 34) und die Abstandhalter (35, 36, 37, 38) in ihrer gestreckten Länge derart aufeinander abgestimmt sind, daß im Verrasterungszustand zwischen der äußeren Bodenfläche des Installationsgerätes (3) und dem Bodenbereich (15) der Grundplatte (1) ein definierter Abstand gebildet ist.

## Claims

1. Retainer for socket outlets in cable trunking with fixing elements for attachment to base areas of the cable trunking which feature longitudinally arranged, U-shaped snap-on holders with opposing, outwardly projecting snap-fitting sides which latch in behind clip-in elements moulded to the socket outlet, characterised by the fact that a base plate (1), equipped with clip-in elements (11, 12) pointing towards the snap-on holder (2) of the cable trunking base, is provided which, along its one longitudinal edge (13), features at least two clip-in apertures (131, 132, 133, 134) altemating with the apertures (121) for the clip-in elements (12) pointing towards the cable trunking and, on its opposite longitudinal edge (14), features at least one clip-in aperture (141) for appropriately projecting clip-in hooks (31, 32, 34) formed on the underside of the socket outlet (3) and equipped with mutually opposing clip-in lugs (311, 321, 341) and that spacers (35, 36, 37, 38) running in the same direction of projection as the clip-in hooks (31, 32, 34) are integrated close to the edge of the base of the socket outlet (3) to support the socket outlet (3) when it is engaged in position on the base areas (15) allocated to it on the base plate (1).

2. Retainer as claimed in claim 1, characterised by the fact that the projecting length of the clip-in hooks (31, 32, 34) and of the spacers (35, 36, 37, 38) is co-ordinated in such a way that, when engaged, a defined space is formed between the outer base surface of the socket outlet (3) and the base area (15) of the base plate (1).

## Revendications

1. Système de fixation pour appareillage électrique placé dans goulotte, comprenant des éléments de fixation, conçu pour fixer en fond de goulottes, lesquelles sont munies de formes d'accrochage longitudinales à section en U, et de formes en saillie, orientées dans le sens opposé, qui se combinent avec les clips de la fixation de l'appareillage, caractérisé en ce qu'une plaque support (1) munie d'éléments de clippage (11, 12) orientés vers la forme d'accrochage (2) du socle de la goulotte, est prévue, dont une de ses longueurs (13) est équipée en altemance d'orifices (121) pour les éléments de clippage (12) orientés vers la goulotte et d'au moins 2 orifices de clippage (131, 132, 133, 134) et dont la longueur opposée (14) est équipée d'un orifice de clippage (141) prévu pour les tenons (31, 32, 34), verticaux, terminés par un nez de clippage (311, 321, 341) placés sur la partie inférieure de l'appareillage électrique (3) et en ce que des entretoises (35, 36, 37, 38) situées près du bord du socle de l'appareillage électrique (3) et orientées dans la même direction que les tenons (31, 32, 34), servent d'appui à l'appareillage électrique (3), à l'état clippé, sur le fond (15) de la plaque support (2).

2. Système de fixation selon la revendication 1, caractérisé en ce que les tenons (31, 32, 34) et les entretoises (35, 36, 37, 38) ont été conçus de manière à ce qu'il y ait, à l'état clippé, un espace défini entre la surface extérieure du fond de l'appareillage électrique (3) et le fond (15) de la plaque support (15).
